# EUROPEAN PATENT SPECIFICATION

(11) **EP 1 819 880 B1**
(45) Date of publication and mention of the grant of the patent: **26.03.2008**
(21) Application number: 05820570.9
(22) Date of filing: 22.11.2005
(51) Int. Cl.: E02B 11/00, B29C 69/02, B29C 59/04, B29C 47/32, B29C 53/22

(54) **STRUCTURED PLATES COMPRISING WASTE POLYMERS AND A PROCESS FOR PRODUCING SUCH PLATES**
ABFALLPOLYMERE UMFASSENDE STRUKTURIERTE PLATTEN UND VERFAHREN ZUR HERSTELLUNG SOLCHER PLATTEN
NATTE DE DRAINAGE ET PROCÉDÉ DE PRODUCTION D'UNE TELLE NATTE DE DRAINAGE

(30) Priority: 26.11.2004 EP 04028179
(43) Date of publication of application: 22.08.2007
(73) Proprietor: Colbond B.V., 6827 AV Arnhem (NL)
(72) Inventor: VAN VLIET, Arie, Hendrik, Frans, NL-6814 JM Arnhem (NL)
(74) Representative: Oberlein, Gerriet H. R.
(86) International application number: PCT/EP2005/012456
(87) International publication number: WO 2006/056392

(56) References cited:
- US-A- 4 381 630
- US-A- 5 820 296

## Description

The invention described herein pertains structured plates comprising waste polymers and a process for producing structured plates comprising waste polymers. The structured plates have two non-planar surfaces and are optimised regarding mechanical strength and fluidic or flow properties. Said structured plates are produced by heating a quantity of a polymeric material, extruding the polymeric material and pressing the polymeric material between a first and second driven cooperating rolls, one of said first and second rolls having a contour which is the reverse of a desired non-planar contour for a first major surface of the finished product and the other of said first and second rolls having a contour which is reverse of a desired contour of a second major surface of the finished product.

Over the years the number and variety of purposes for which plastic materials have been used increased significantly. In particular for bulk applications, e.g. as in the field of geosynthetics, it is of utmost importance to develop and apply plastic materials which not only satisfy the needs in terms of performance, but can also be produced by low cost manufacturing processes and/or from inexpensive raw materials. With respect to inexpensive raw materials waste polymers or recycled polymers are considered a viable option. Waste polymers can be virtually cost free and save in addition the disposal of waste material if a polymer processing company uses its own polymer waste material. Hence, making possible the processing of waste polymers for the production of said structured plates would be very cost efficient.

However, the use of waste polymers as raw materials causes problems in processing such as clogging of the outlet mould and/or filters or the impossibility of forming the non-planar plastic material after extruding through a shaped mould in a second step. Waste polymers may show a high content of impurities such as dirt particles, various additives, gel particles or dyes. Even if the waste polymers contains only a single type of polymer, e.g. polypropylene, considerable differences in melt viscosity may occur. But not only differences in melt viscosity may occur, some of the contents of the waste material won't melt in the heating process or be capable of flowing at all. Their viscosity may not change and these impurities remain in the product in particle form. Hence, waste polymers are used only for rather crude products, e.g. park benches or lawn boundary bricks.

The structured plates according to the present invention are suitable for applications in the field of geosynthetics and can be used as drain or drainage mat. The volume flow through the channels of prior art structured plates is limited by the size and shape of the flow channels. However, the size of the flow channel cannot simply be increased. Increasing the size of the flow channel without increasing wall thickness of the plate material would lead to insufficient mechanical stability.

On the other hand, increasing the wall thickness would add considerably to manufacturing costs as more polymeric material would be needed.

In addition, with prior art structured plates to be used as drain or drainage mat having a rectangular flow channel fouling or clogging can often be observed. The reason for this is that there is almost no volume flow in the corners of the flow channels which could lead to sedimentation of particles and subsequently fouling or clogging in these areas. As an alternative flow channels with symmetric trapezoid profiles are available. The major disadvantage of such profiles is that they can be easily compressed to an almost flat structure. The mechanical stability of such profiles is insufficient.

In contrast to rectangular flow channels, flow channels with curved e.g. round or semi circular profile show good fluidic or flow properties. But as drainage mats are often connected to one or more filter fabrics round contours promote entering of the filter fabric into the flow channel because the contact area of the filter fabric with the structured plate is very small. The structured plate with round or semicircular profile thus offers very little support for the filter fabric. If flow channel can not be kept free of filter fabric the size of flow channel decreases.

US-A-3,478,138 discloses a method of making thermoplastic articles in continuous strips having non-planar surface contours. The polymeric materials used in the method according to US-A-3,478,138 are thermoplastic materials of any desired type. Also additives can be used, if so desired. However, the use of waste polymers is not disclosed in US-A-3,478,138. Neither is the issue of mechanical stability and fluidic or flow properties addressed.

A process and an apparatus for the production of a polymeric plate is described in DE-A-19541547. As an intermediate product a planar plate is produced, which subsequently undergoes a contouring process to finally obtain a structured plate. DE-A-19541547 also discloses the use of waste polymers but the ratio of waste polymers to new polymer material is not disclosed. However DE-A-19541547 does not describe a one step process but a process with an intermediate product in which waste polymers apparently are not used to such an extent or to such a high content of impurities that clogging occurs. In addition DE-A-19541547 does not disclose how said structured plates could be formed to improve mechanical stability and fluidic or flow properties.

The DE-A-17921799 discloses a polymeric strip having at least one contoured surface. The strip is manufactured by an extrusion process, followed by a second step providing the strip with the desired contour. The strips produced by the two step process of DE-A-19721799 are useful for mats e.g. in banks of garbage dumps. Again DE-A-19721799 does not disclose how the contour of the strip could be improved regarding mechanical stability and fluidic or flow properties. DE-A-19721799 also does not address the issue of waste polymers.

Usage of waste polymers containing impurities and contaminations not only leads to clogging of the outlet mould but also often leads to the formation of bubbles in the molten material and to big dieswell i.e. volume expansion of the molten material after leaving the extruder. The formation of thin walls or fine structures after extrusion is thus not possible. Furthermore, the cooled polymeric material is very brittle. This brittleness makes further forming of a planar material in another process step virtually impossible. The product would most likely break in the contouring process. Hence, a non-planar structure can hardly be achieved when waste polymers are used.

It is an object of this work to provide structured plates particularly useful for drain or drainage applications with enhanced mechanical stability and fluidic or flow properties. It is another object of this work to provide a process for the production of said structured plates that is particularly suitable to be used with waste polymers.

This object can be achieved by a structured plate or strip with a non planar front side and a non planar reverse side. The structured plate or strip exhibits a corrugated section. "Corrugated" as used herein means containing regular grooves. Said grooves having an outer surface and a corresponding inner surface. The outer surface of said grooves has at least three faces which form edges where these faces adjoin. The inner surface shows reinforcements running continuously along the area opposite to the edges on the outer surface. The reinforcements in shape of a concave curvature are located only on the inner surface. A structured plate according to the invention will always comprise edges on the outer surface. The inner surface corresponding to the angular outer surface has thus a non angular profile. Prior art plates without reinforcement are easy to bend. Bending reduces the volume flow that is drained by the plates. The structured plates according to the invention show a higher resistance to bending and thus resist the formation of sharp bends in the drain.

In a preferred embodiment the outer surface of the structured plate according to the invention is rectangular in shape. The reinforcement on the inner surface in shape of a concave curvature opposite to the edge of the rectangular outer surface having thus two legs perpendicular to each other. The leg length b of the reinforcement can be defined against the width B of the groove. The ratio of b/B lies between 0,01 - 0,5 preferably 0,1 - 0,5.

The concave curvature of the reinforcement may be elliptical or a sector of a circle. The radius of that circle would equal the leg length b of the reinforcement being between 0,1 Band 0.5B.

To further increase the stability of the structured plate according to the invention it is preferred that the outer surface of the structured plate is rectangular in shape and the corresponding inner surface starting parallel to outer surface area passing into a surface area that is narrowing to the base of the inner surface by α = 5° to 20° to that inner surface area substantially parallel to outer surface area, passing then into a curvature R, said curvature R passes into a surface area C substantially parallel to outer surface forming the base of the inner surface profile.

Said structure used as drain or drainage mat makes larger flow channels possible without loss in mechanical stability. Prior art drainage mats have flow channels only a few millimetres wide with very limited capacity to drain off fluids. The structured plates according to the present invention can easily be 50mm in width and depth and transport larger volume flows than prior art mats e.g. with rectangular grooves.

Waste polymers allow production not only at same costs but even at lower costs than prior art structured plates even though more polymeric material is needed for the polymeric structured plates according to the invention.

The structured plates according to the present invention combine in a unique way three advantages:

By not simply increasing the overall wall thickness to improve mechanical stability but by reinforcing certain areas of the structured plates the mechanical stability can be equally improved. Because of the shape of the reinforcement at the same time the or flow properties are improved by avoiding corners in the flow channel. Furthermore the use of waste polymers allows production of the structured plates according to the invention at less expenditure as prior art structured plates.

In standard extrusion processes the extruder melts the material and the molten polymer is extruded through spinning holes or slits in order to apply a certain shape or contour to the plate or strip, in many cases also preceded by an additional filtration step. When applying waste polymers containing impurities the spinning holes or filters get clogged which is detrimental to both product and process. As a consequence, in processes of the prior art usually virgin raw materials are used, which are extruded via a shaped mould or die. The use of cheap waste polymers is very limited due to the high content of impurities and the different physical properties of the various waste polymer contents.

The process for producing structured plates according to the invention comprises the steps of
- heating a quantity of a polymeric material, in which heating is performed until the polymeric material has a melt viscosity sufficient to be extruded,
- extruding the polymeric material and
- pressing the polymeric material between a first and second driven cooperating rolls, one of said first and second rolls having a contour which is the reverse of a desired nonplanar contour for a first major surface being the front side of the finished product, and the other of said first and second rolls having a contour which is the reverse of a desired nonplanar contour of a second major surface being the reverse side of the finished product,
- solidifying of the polymeric material while being pressed and structured between the first and second rolls in a single process step, the first and second rolls are partially immersed in a cooling liquid.

It is preferred that the first and second rolls are approximately half immersed in a cooling liquid i.e. till the centre of the rolls. A preferred cooling liquid is water. The rolls can also be less than half immersed in water. It is important that the rolls are continuously wetted so that the rolls are cooled and adhesion of the polymeric material to the rolls is reduced.

The polymeric material is a composition that comprises one or more polymer types, at least one type of which essentially consists of a waste polymer or a recycled polymer.

The process for producing structured plates according to the present invention thus is a one step process wherein solidification, pressing and structuring, i.e. contouring is performed simultaneously. By pressing the polymeric material between two rolls having matching profiles the final shape is fixed by the opening between the rolls where it solidifies. In contrast to the conventional technology, where the forming of the polymeric material is done by extruding it e.g. through a shaped mould or die there are no constrictions of that kind in the process described herein. The extruder heats the material and at the exit of the extruder there are no constrictions like a shaped mould which could be clogging due to contamination by non molten particles. When processing waste polymers the formation of bubbles or foam after extrusion can often be observed. The formation of foam or bubbles is caused by decomposition products, e.g. Carbon dioxide resulting from the heating of the polymeric material. Bubbles or foam might also occur when the polymer batch contains water e.g. when the waste polymer fraction was subjected to a flotation step. This water evaporates during heating and extrusion. The so generated vapour causes bubble or foam formation. Bubbles or foam are removed from the material by pressing the polymeric material between the two cooperating rolls.

Due to the fact that the forming process takes place between the rolls, it is sufficient to heat the polymeric material to only such a temperature that enables the flow of the polymeric material out of the extruder.

As indicated the size of the grooves can be increased when a structured plate according to the invention is used because of the optimised mechanical stability. It is thus preferred if the contours of the first and second rolls are selected such that the thickness A of the structured plate after solidification and pressing lies in the range of 1 to 50mm, preferably 1 to 20mm, more preferably 1 to 10mm. The wall thickness t of the polymeric material building the structured plate varies between 100µm and 1000µm in the non-reinforced areas. The wall thickness in the reinforced areas tᵣ varies between 500µm and 5000µm.
The weight of the structured plate according to the invention lies between 400g/m² and 3000 g/m², preferably between 600 g/m² and 900 g/m² .

The polymeric materials used for the process for producing structured plates according to the invention can be highly contaminated with impurities. The content of waste polymers should be at least as much as additional polymeric material is needed for the reinforcements. For many purposes the composition used in the process contains an overall amount of waste polymers or recycled polymers of 10 - 100 wt%. A share of 30 - 100 wt% waste polymers is also possible as is an amount of waste polymers of 50 - 100 wt%. Preferably the waste polymers used for the production of said structured plates amounts to 70 - 100 wt%, more preferably to 90 - 100 wt%.

The process for producing structured plates according to the invention accepts at its input a large variety of materials, varying in terms of shape, colour, melt viscosity and/or impurities. Basically all kinds of polymeric materials -provided it can be heated such that it will flow out of the extruder- can be used. It is however preferred that the types of polymers introduced into the process are selected from the group containing polyester, polyamide, polyethylene, polypropylene, polyvinylchloride, polystyrene and/or mixtures thereof.

The structured plates according to the invention can be used for a variety of applications. Although the source of the polymeric material may cause visible irregularities regarding colour, these irregularities are negligible when the material is used for non visible applications. One non visible application the structured plates are particularly suitable for are drain or drainage mats. It is preferred that this drainage mat comprises the structured plate connected to one or more filter fabrics thus avoiding that coarse grained substances enter the flow channel of the drainage mat which would hinder draining off.

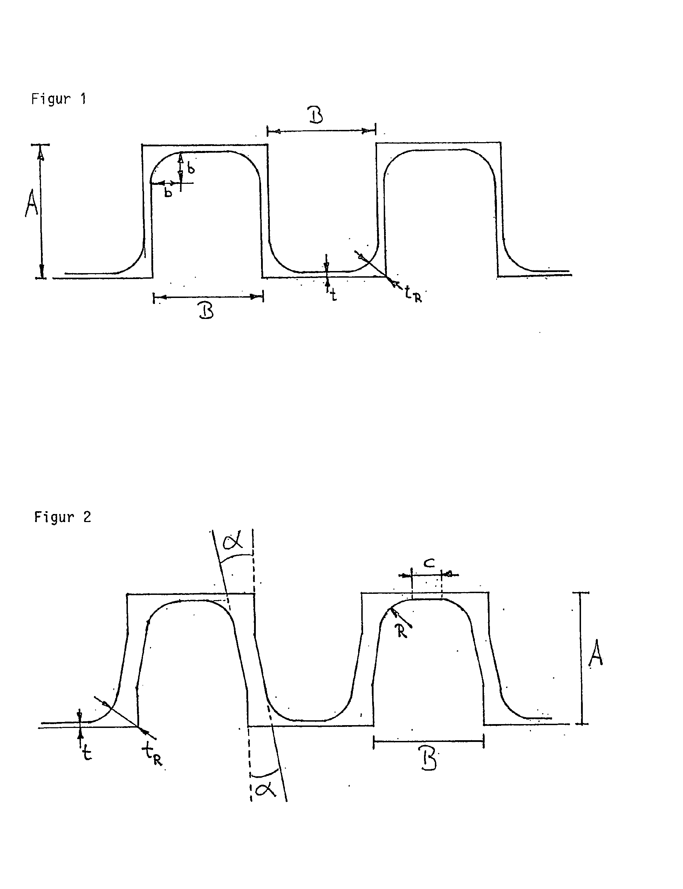

The invention is further illustrated by means of figures 1 and 2. Figure 1 shows the cross section of a structured plate according to the invention. t indicates the wall thickness in the non reinforced areas and tᵣ the wall thickness in the reinforced areas. The curved reinforcement on the inner surface has two legs perpendicular to each other. The leg length b of the reinforcement can be defined against the width B of the groove. The ratio of b/B lies between 0,01 - 0,5 preferably 0,1 - 0,5. A indicates the thickness of the structured plate.
Figure 2 shows a preferred embodiment of the structured plate according to the invention. To further increase the stability of the structured plate the outer surface of the structured plate is rectangular in shape and the corresponding inner surface starting parallel to outer surface area passing into a surface area that is narrowing to the base of the inner surface by α = 5° to 20° to that inner surface area substantially parallel to outer surface area, passing then into a curvature R, said curvature R passes into a surface area C substantially parallel to outer surface forming the base of the inner surface profile.

### Example:

Polymer material consisting of ground polyolefine from a PET bottle recycling plant (closures (PP,HDPE) and wraps (LDPE) is fed into an 80 mm Erema recycling extruder with an output of 100 kg/hr. The material is heated to 240°C.

The extrudate is delivered through 4 holes of 8mm diameter at 8 cm distance into the nip of two stainless steel rolls with a diameter of 250 mm and a width of 400 mm. The axis of the rolls lie in the same horizontal plane. The rolls are counter rotating at a speed of 13 m/min. The surface of the rolls is provided with a profile as given in fig.2 in which B=3.1mm, R=0,7mm, C=9mm, α=15°, A=3,1mm, t=0,2mm, tᵣ=0,7mm.

The two rolls are immersed in a water bath at a temperature of 35°C up to the centre of their axis. The polymer is thus pressed and cooled between the two rolls after which it immediately enters the water bath where it is further cooled.

The profile thus obtained has a weight of 816 gr/m², a tensile strength of 1,80 kN/10 cm width.

## Claims

1. Structured plate or strip with a corrugated section comprising grooves, having an outer surface and a corresponding inner surface **characterised in that** the outer surface of said grooves has at least three faces which form edges where they adjoin, the inner surface shows reinforcements along the area opposite to the edges on the outer surface, the reinforcements are in shape of a concave curvature.

2. Structured plate according to claim 1 **characterised in that** the outer surface is rectangular in shape.

3. Structured plate according to claim 2 **characterised in that** the ratio of leg length b of the reinforcement to the width B of the groove lies between 0,01 and 0,5.

4. Structured plate according to claim 2 or 3 **characterised in that** the outer surface is rectangular in shape and the corresponding inner surface is starting parallel to outer surface area passing into a surface area that is narrowing to the base of the inner surface by 5° to 20° to that inner surface area parallel to outer surface area, passing then into a curvature, said curvature passes into a surface area parallel to outer surface forming the base of the inner surface profile.

5. Structured plate according to any of the preceding claims 1 to 4 **characterised in that** the thickness A of the structured plate lies in the range of 1 to 50mm.

6. Structured plate according to any of the preceding claims 1 to 5 **characterised in that** the wall thickness of the polymeric material building the structured plate varies between 100µm and 1000µm in the non-reinforced areas and between 500µm and 5000µm in the reinforced areas.

7. Process for producing structured plates according to any of the preceding claims 1 to 6 , comprising the steps of heating a quantity of a polymeric material, heating is performed until the polymeric material has a melt viscosity sufficient to be extruded, extruding the polymeric material and pressing the polymeric material between a first and second driven cooperating rolls, one of said first and second rolls having a contour which is the reverse of a desired nonplanar contour for a first major surface of the finished product, and the other of said first and second rolls having a contour which is the reverse of a desired nonplanar contour of a second major surface of the finished product, solidifying of the polymeric material while being pressed and structured between the first and second rolls in a single process step, the first and second rolls are partially immersed in a cooling liquid, and the polymeric material is a composition that comprises one or more polymer types, at least one type of which essentially consists of a waste polymer or a recycled polymer

8. The process according to claim 7, **characterised in that** the polymeric material is a composition that contains an overall amount of waste polymers or recycled polymers of 10 - 100 wt%.

9. The process according to claim 7 or 8, **characterised in that** the polymeric material is a composition that comprises one or more polymer types selected from the group containing polyester, polyamide, polyethylene, polypropylene, polyvinylchloride, polystyrene and/or mixtures thereof.

10. Use of the structured plate according to any of the claims 1-9 as drain or drainage mat.

11. A drainage mat according to claim 10 connected to one or more filter fabrics.

## Patentansprüche

1. Strukturplatte oder Strukturstreifen mit einem gewellten Querschnitt, welcher Nuten umfasst, die eine äußere Oberfläche und eine entsprechende innere Oberfläche aufweisen, **dadurch gekennzeichnet, dass** die äußere Oberfläche der Nuten mindestens drei Flächen besitzt, die dort, wo sie aneinander stoßen, Kanten bilden, die innere Oberfläche Verstärkungen entlang dem Bereich gegenüber den Kanten an der äußeren Oberfläche zeigt und die Verstärkungen in Form einer konkaven Krümmung vorliegen.

2. Strukturplatte nach Anspruch 1, **dadurch gekennzeichnet, dass** die äußere Oberfläche rechteckig geformt ist.

3. Strukturplatte nach Anspruch 2, **dadurch gekennzeichnet, dass** das Verhältnis der Schenkellänge b der Verstärkung zur Breite B der Nut zwischen 0,01 und 0,5 liegt.

4. Strukturplatte nach Anspruch 2 oder 3, **dadurch gekennzeichnet, dass** die äußere Oberfläche rechteckig geformt ist und die entsprechende innere Oberfläche parallel zum äußeren Oberflächenbereich beginnt und in einen Oberflächenbereich übergeht, der sich zur Basis der inneren Oberfläche hin um 5° bis 20° zu dem parallel zum äußeren Oberflächenbereich verlaufenden inneren Oberflächenbereich verengt, und dann in eine Krümmung übergeht, wobei die Krümmung in einen Oberflächenbereich parallel zur äußeren Oberfläche übergeht und die Basis des inneren Oberflächenprofils bildet.

5. Strukturplatte nach einem der vorhergehenden Ansprüche 1 bis 4, **dadurch gekennzeichnet, dass** die Stärke A der Strukturplatte im Bereich von 1 bis 50 mm liegt.

6. Strukturplatte nach einem der vorhergehenden Ansprüche 1 bis 5, **dadurch gekennzeichnet, dass** die Wandstärke des die Strukturplatte bildenden Polymermaterials zwischen 100 µm und 1000 µm in den nicht verstärkten Bereichen und zwischen 500 µm und 5000 µm in den verstärkten Bereichen variiert.

7. Verfahren zum Herstellen von Strukturplatten nach einem der vorhergehenden Ansprüche 1 bis 6, umfassend die Schritte des Erwärmens einer Menge eines Polymermaterials, wobei solange erwärmt wird, bis das Polymermaterial eine zum Extrudieren ausreichende Schmelzviskosität aufweist, des Extrudierens des Polymermaterials und des Pressens des Polymermaterials zwischen eine erste und zweite zusammenwirkende angetriebene Rolle, wobei eine der ersten und zweiten Rolle eine Kontur aufweist, die das Gegenteil einer gewünschten nichtplanaren Kontur für eine erste Hauptfläche des Endprodukts ist, und die andere der ersten und zweiten Rolle eine Kontur aufweist, die das Gegenteil einer gewünschten nichtplanaren Kontur einer zweiten Hauptfläche des Endprodukts ist, des Erstarrens des Polymermaterials während des Pressens und Strukturierens zwischen der ersten und zweiten Rolle in einem einzigen Verfahrensschritt, wobei die erste und zweite Rolle teilweise in einer Kühlflüssigkeit eingetaucht sind und das Polymermaterial eine Zusammensetzung ist, die ein oder mehrere Polymerarten umfasst, wobei mindestens eine Art davon im Wesentlichen aus Polymerabfällen oder einem Polymerrecyclat besteht.

8. Verfahren nach Anspruch 7, **dadurch gekennzeichnet, dass** das Polymermaterial eine Zusammensetzung ist, die eine Gesamtmenge an Polymerabfällen oder Polymerrecyclaten von 10 bis 100 Gew.-% enthält.

9. Verfahren nach Anspruch 7 oder 8, **dadurch gekennzeichnet, dass** das Polymermaterial eine Zusammensetzung ist, die ein oder mehrere Polymerarten umfasst, die aus der Gruppe ausgewählt sind, die Polyester, Polyamid, Polyethylen, Polypropylen, Polyvinylchlorid, Polystyrol und/oder Mischungen daraus umfasst.

10. Verwendung der Strukturplatte nach einem der Ansprüche 1 bis 9 als Abfluß- oder Drainagematte.

11. Drainagematte nach Anspruch 10, die mit einem oder mehreren Filtergeweben verbunden ist.

## Revendications

1. Plaque ou bande structurée munie d'une section ondulée comprenant des rainures, ayant une surface extérieure et une surface intérieure correspondante, **caractérisée en ce que** la surface extérieure desdites rainures a au moins trois faces qui forment des bords où elles se rejoignent, la surface intérieure présente des renforcements le long de la région opposée aux bords situés sur la surface extérieure, les renforcements ont la forme d'une courbure concave.

2. Plaque structurée selon la revendication 1, **caractérisée en ce que** la surface extérieure est de forme rectangulaire.

3. Plaque structurée selon la revendication 2, **caractérisée en ce que** le rapport de la longueur de branche b du renforcement sur la largeur B de la rainure est compris entre 0,01 et 0,5.

4. Plaque structurée selon la revendication 2 ou 3, **caractérisée en ce que** la surface extérieure est de forme rectangulaire et la surface intérieure correspondante commence parallèlement à la région de surface extérieure se transformant en une région de surface qui diminue jusqu'à la base de la surface intérieure d'un angle de 5° à 20° jusqu'à cette région de surface intérieure parallèlement à la région de surface extérieure, passant ensuite en une courbe, ladite courbe se transforme en une région de surface parallèle à la surface extérieure formant la base du profil de surface intérieure.

5. Plaque structurée selon l'une quelconque des revendications 1 à 4, **caractérisée en ce que** l'épaisseur A de la plaque structurée est comprise dans l'intervalle de 1 à 50 mm.

6. Plaque structurée selon l'une quelconque des revendications 1 à 5, **caractérisée en ce que** l'épaisseur de paroi du matériau polymère constituant la plaque structurée varie entre 100 µm et 1000 µm dans les régions non renforcées et entre 500 µm et 5000 µm dans les régions renforcées.

7. Procédé de production de plaques structurées conformes à l'une quelconque des revendications 1 à 6, comprenant les étapes consistant à chauffer une certaine quantité d'un matériau polymère, le chauffage est effectué jusqu'à ce que le matériau polymère ait une viscosité à l'état fondu suffisante pour lui permettre d'être extrudé, extruder le matériau polymère et presser le matériau polymère entre un premier et un deuxième cylindres entraînés coopérants, l'un desdits premier et deuxième cylindres ayant un contour qui est l'inverse d'un contour non plat souhaité pour une première surface principale du produit fini, et l'autre desdits premier et deuxième cylindres ayant un contour qui est l'inverse d'un contour non plat souhaité d'une deuxième surface principale du produit fini, solidification du matériau polymère tout en étant pressé et structuré entre les premier et deuxième cylindres en une seule étape de traitement, les premier et deuxième cylindres sont partiellement immergés dans un liquide de refroidissement, et le matériau polymère est une composition qui comprend un ou plusieurs types de polymères, dont au moins un type consiste essentiellement en du déchet de polymère ou du polymère recyclé.

8. Procédé selon la revendication 7, **caractérisé en ce que** le matériau polymère est une composition qui contient une quantité totale de déchets de polymères ou de polymères recyclés comprise entre 10 et 100 % en poids.

9. Procédé selon la revendication 7 ou 8, **caractérisé en ce que** le matériau polymère est une composition qui comprend un ou plusieurs types de polymères choisis parmi les polyesters, polyamides, polyéthylènes, polypropylènes, poly(chlorure de vinyle), polystyrènes et/ou leurs mélanges.

10. Utilisation de la plaque structurée de l'une quelconque des revendications 1 à 9 comme drain ou mat de drainage.

11. Mat de drainage selon la revendication 10, connecté à un ou plusieurs tissus de filtration.
